# EUROPÄISCHE PATENTSCHRIFT

(11) **EP 4 114 302 B1**
(45) Veröffentlichungstag und Bekanntmachung des Hinweises auf die Patenterteilung: **28.02.2024**
(21) Anmeldenummer: 21712030.2
(22) Anmeldetag: 03.03.2021
(51) Int. Cl.: A61C 17/20, A61C 17/22, A61C 19/00, A61C 19/02

(54) **ZAHNPFLEGEANORDNUNG**
DENTAL CARE ASSEMBLY
ENSEMBLE DE SOINS DENTAIRES

(30) Priorität: 06.03.2020 DE 202020101251 U
(43) Veröffentlichungstag der Anmeldung: 11.01.2023
(73) Patentinhaber: Marian, Calin, 60311 Frankfurt am Main (DE)
(72) Erfinder: Marian, Calin, 60311 Frankfurt am Main (DE)
(74) Vertreter: Keil & Schaafhausen Patentanwälte PartGmbB
(86) Internationale Anmeldenummer: PCT/DE2021/100220
(87) Internationale Veröffentlichungsnummer: WO 2021/175379

(56) Entgegenhaltungen:
- DE-A1- 10 061 927
- DE-A1- 10 061 927
- KR-A- 20140 073 347
- KR-A- 20140 073 347
- KR-A- 20170 114 698
- KR-A- 20170 114 698
- US-A1- 2011 100 865
- US-A1- 2011 100 865

## Beschreibung

Die vorliegende Erfindung betrifft eine Zahnpflegeanordnung nach dem Oberbegriff des Anspruchs 1.

Eine derartige Zahnpflegeanordnung ist aus US 2021/175379 A1 und aus US2011/100865 A1 bekannt.

US 2012 022 77 60 A1 beschreibt einen Behälter zur Aufbewahrung eines Dentalhygienesets. Im Wesentlichen besteht der Behälter aus zwei Hälften, die in einem zusammengebauten Zustand eine hohle Kugel formen. Der Hohlraum bietet ausreichend Platz für eine zusammenklappbare Zahnbürste, Zahnpasta und eine Zahnseidevorrichtung. Der Behälter soll in Verkaufsautomaten verkauft werden.

DE 20 2017 003 642 U1 beschreibt eine Ultraschallreinigungsschiene, die an einen Mundschutz, beispielsweise aus dem Boxsport, erinnert. Diese Ultraschallreinigungsschiene weist einen Ultraschallerzeuger auf, dessen erzeugte Wellen die Zähne reinigen. Dazu verlaufen die Ultraschallwellen von oral (Bereich der Zunge) nach vestibulär (Bereich der Backen und Lippen). Die Ultraschallreinigungsschiene weist weiterhin einen durch Induktion aufladbaren Akku und eine Steuer- und Überwachungselektronik auf. Weiterhin umfasst die Ultrasschallreinigungsschiene akustische und optische Signalgeber.

US 2016 011 37 45 A1 beschreibt eine weitere Vorrichtung und ein Verfahren, die durch Ultraschall Zähne reinigt. Die Vorrichtung erinnert an einen Mundschutz mit einem Griff. Der Griff beinhaltet eine Batterie, einen Ultraschallcontroller und entsprechende elektrische Verbindungen. Ein Mundstück, das der Benutzer in seinen Mund nimmt, weist einen oder mehr Ultraschallerzeuger auf. Vorzugsweise ist eine Verbindung zwischen dem Griff und dem Mundstück als Kugelgelenk ausgebildet und lässt sich entsprechend den Bedürfnissen anpassen. Um eine Reinigungswirkung durch Ultraschallwellen zu erhöhen, kann der Benutzer aus verschiedenen Programmmodi wählen. So weisen die Programmmodi unterschiedliche Frequenzen und / oder Intensitäten auf.

In WO 2012 088 193 A2 ist eine Vorrichtung beschrieben, die durch Ultraschall Zähne reinigen soll. Die Vorrichtung ist durch ein Kabel mit einem Regler verbunden, wobei der Regler wiederum mit einer Steuereinrichtung und einer Stromquelle verbunden ist. Die Steuereinrichtung dient zur Steuerung der Mundschiene und des Ultraschalls. So kann man durch die Steuereinrichtung einen Wirkbereich der Vorrichtung und eine gewünschte Frequenz des Ultraschalls wählen. Außerdem weist die Steuereinrichtung einen Stopp-Schalter auf. Die Vorrichtung erinnert an einen Mundschutz, beispielsweise aus dem Kampfsport. So weist das Mundstück im Querschnitt ein H-Profil auf, in dem mehrere Schallerzeuger angeordnet sind.

DE 20 2014 105 367 U1 beschreibt eine Vorrichtung, die einen Aufnahmeraum für eine Zahnbürste aufweist, wobei der Aufnahmeraum eine UV-Lampe zur Sterilisation der Zahnbürste umfasst. Der Aufnahmeraum dient gleichzeitig als Handgriff der Zahnbürste. Um sich mit der Zahnbürste die Zähne zu putzen, wird die Zahnbürste aus dem Aufnahmeraum entnommen und anders herum auf den Handgriff gesteckt. Die Verbindung zwischen der Zahnbürste und dem Handgriff wird durch Klemmung gehalten.

Alle oben beschriebenen und bekannten Vorrichtungen zur Zahn- und MundPflege müssen in einer sanitären Einrichtung verwendet werden, wo der Nutzer ein Waschbecken vorfindet und ca. 10 Minuten verweilen muss. Er braucht fließendes Wasser, einen Becher zur Mundspülung, Putzvorrichtung, ein Tuch zum Abtrocknen der Lippen, eventuell noch ein Tuch um die Einrichtung abzuwischen, einen Spiegel, einen Platz zum Abstellen der Utensilien und der Zahnpasta und eventuell soll eine Steckdose mit einer Ladestation vorhanden sein.

Teilchen aus dem entfernten Zahnbelag bleiben klebend auf die Zahnputzvorrichtung zurück, wo die Bakterien gute Bedienungen vorfinden um sich zu vermehren. Somit kann bei erneutem Verwendung eine zusätzliche Infektion des Mundraumes entstehen.

Es wurde festgestellt, dass sehr viele Patienten morgens keine Zeit, mittags keine Möglichkeiten haben und abends zu müde sind um eine effiziente, tägliche Zahn- und Mundpflege nach dem oben beschriebenen Vorgehen zu betreiben. Die mangelnde Zahn- und Mundpflege ist die erste Ursache für epidemische Mundkrankheiten, wie Zahnkaries, Gingivitis oder Parodontitis.

Eine tägliche, gründliche und regelmäßige Zahn- und Mundpflege ist die einzige effiziente Methode, zahnärztlich bewiesen, für die Vorbeugung dieser Krankheiten, oder der Erhaltung nach Parodontal Behandlungen.

Die der Erfindung zugrundeliegende Aufgabe ist, dass die Zahnpflege an jedem Ort und in jeder Situation ermöglicht werden soll, ohne die Hände dafür zu benutzen und von einer sanitären Einrichtung abhängig zu sein.

Die Erfindung ermöglicht die Zahn- und Mund- Pflege, die Desinfektion des Mundstückes, das Speichern und Abrufen von Daten über die durchgeführte Hygiene mit einer Vorrichtung die in einer Kleidertasche, oder Handtasche tragbar ist und erfordert keine Handbetätigung. Die Reinigung kann an fast jeden Ort und Gelegenheit in ca. 60 Sekunden durchgeführt. Der Nutzer kann gleichzeitig auch andere Tätigkeiten durchführen, ohne dass er isoliert in einer Sanitäre Einheit verweilen muss.

Diese Aufgabe wird mit den Merkmalen des Anspruchs 1 gelöst.

Eine UV-Lampe ist im Behälter angeordnet, deren Wirkbereich die Zahnpflegeelementaufnahme umfasst. Die UV-Lampe erzeugt eine Strahlung, die im ultravioletten Bereich liegt. Diese Strahlung wirkt antibakteriell, keimtötend und sterilisierend. Weiterhin wird durch die UV-Lampe Ozon (O3) erzeugt, das Gerüche neutralisiert. Zudem wirkt Ozon antibakteriell, keimtötend und sterilisierend. Dadurch wird der Behälter und ein Inhalt des Behälters, insbesondere die Zahnpflegeelementaufnahme, steril gehalten. Mögliche Keime und Bakterien werden durch die UV-Lampe eliminiert.

Die UV-Lampe ist mit einer Steuereinrichtung verbunden, mit der ein Betriebszustand der UV-Lampe veränderbar ist. Durch die Steuereinrichtung kann zwischen verschiedenen Betriebszuständen der UV-Lampe wechseln. Je nach Notwendigkeit oder Bedürfnis kann ein passender Betriebszustand gewählt werden.

Die Steuereinrichtung ist mit einem Schließsensor verbunden, mit dem ein Schließzustand des Deckels feststellbar ist. Durch den Schließsensor kann verhindert werden, dass die UV-Lampe leuchtet, während der Deckel geöffnet ist. Da während der Deckel offen ist das Ozon entweichen würde, wodurch es seine sterilisierende Wirkung an einem zu sterilisierenden Objekt, dem Inhalt des Behälters, nicht entwickeln kann. Weiterhin wird eine Lebensdauer der UV-Lampe verlängert, da diese nur in Betrieb ist, wenn der Deckel geschlossen ist, und ein Energieverbrauch der UV-Lampe wird reduziert.

Die Steuereinrichtung weist einen Zeitgeber auf. Durch den Zeitgeber kann die Steuereinrichtung Betriebszeiten einstellen. Beispielsweise ist es möglich, dass die Steuereinrichtung die UV-Lampe nachdem der Deckel geschlossen ist, die UV-Lampe für eine definierte Wirkdauer einschaltet. Man kann davon ausgehen, dass nach einer gewissen Wirkdauer der Wirkbereich sterilisiert ist. Somit hat eine längere Wirkdauer der UV-Lampe keinen Mehrwert.

Mindestens ein Zahnpflegeelement ist entnehmbar in der Zahnpflegeelementaufnahme angeordnet. Um eine zahnreinigende Wirkung zu erzielen wird das Zahnpflegeelement aus dem Behälter entnommen und mit einem oder mehreren Zähnen in unmittelbare Nähe gebracht. Nachdem die zahnreinigende Wirkung erzielt wurde wird das Zahnpflegeelement in den Behälter gelegt.

Das Zahnpflegeelement weist mindestens einen Schallerzeuger insbesondere einen Ultraschallerzeuger auf. Durch die von dem Schallerzeuger erzeugen Schwingungen wird eine zahnreinigende Wirkung erzielt, wenn das Zahnpflegeelement in Kontakt mit mindestens einem Zahn ist. Je nach erzeugter Frequenz befinden sich die Schwingungen in einem hörbaren Schallbereich, Ultraschallbereich und / oder einer Kombination aus beiden. Ein bevorzugter Frequenzbereich liegt zwischen 25 kHz und 10 MHz. Je nach Frequenzbereich kann das Zahnpflegeelement angepasst werden. So sollten im Ultraschallbereich Oberflächen des Zahnpflegeelementes eine relativ glatte Oberfläche aufweisen, während im hörbaren Schallbereich das Zahnpflegeelement eine strukturierte Oberfläche aufweisen sollte.

Der Ultraschall ist beispielsweise für Menschen nicht wahrnehmbar. Dadurch wird der Tragekomfort erhöht.

Das Zahnpflegeelement und die Steuereinrichtung sind durch ein Kabel verbunden. Das Kabel verhindert ein mögliches Verschlucken oder Einatmen des Zahnpflegeelementes. Weiterhin wird das Zahnpflegeelement respektive der Schallerzeuger durch das Kabel elektrisch versorgt. Weiterhin ist der Betriebszustand des Zahnpflegeelementes durch die Steuereinrichtung veränderbar. So kann durch die Steuereinrichtung zwischen verschiedenen Betriebszuständen Ultraschall, hörbarer Schall oder eine Kombination aus hörbarer Schall und Ultraschall gewählt werden. Entsprechend der jeweiligen Bedürfnisse kann so die gewünschte reinigende Wirkung erzielt werden.

Mindestens zwei Zahnpflegemittelspender sind auf gegenüberliegenden Seiten des Deckels der Zahnpflegeelementaufnahme angeordnet. Dies ermöglicht eine Redundanz der Zahnpflegemittelspender. Dadurch kann ein erster leerer Zahnpflegemittelspender befüllt oder ausgetauscht werden und während ein zweiter Zahnpflegemittelspender benutzt wird. Weiterhin können beide Zahnpflegemittelspender gleichzeitig benutzt werden. Alternativ dazu können die Zahnpflegemittelspender mit unterschiedlichen Zahnpflegemitteln befüllt werden, die sich beispielsweise in ihren Aromen unterscheiden. Dadurch kann zwischen zwei bevorzugten Aromen gewählt werden.

Die Zahnpflegemittelspender weisen mindestens eine fluidische Verbindung zu der Zahnpflegeelementaufnahme auf. Durch die Verbindung wird das Zahnpflegemittel auf das Zahnpflegeelement aufgetragen. Weist der Behälter mehrere fluidische Verbindungen auf, kann das Zahnpflegemittel auf mehrere Oberflächen des Zahnpflegeelementes aufgetragen werden.

Vorzugsweise weist die Zahnpflegeelementaufnahme eine reflektierende Oberfläche auf. Durch die reflektierende Oberfläche vergrößert sich der Wirkbereich der UV-Lampe. Die Strahlung der UV-Lampe wird durch die Oberfläche reflektiert, bis sie schließlich auf eine nicht reflektierende Oberfläche triff, beispielsweise einem Zahnpflegeelement.

Vorzugsweise weist der Behälter eine Batterie auf, die mit der Steuereinrichtung verbunden ist. Die Batterie ermöglicht eine ortsunabhängige Benutzung des Behälters.

Vorzugsweise ist die Batterie mit einer Batterieladeanordnung verbunden. Durch die Batterieladeanordnung kann die Batterie festverbaut werden, was einen Bauraum der Batterie reduziert. Beispielsweise kann die Batterieladeanordnung einen gängigen USB-Eingang (Micro USB, USB Typ-C, oder dergleichen) aufweisen der als Stromquelle dient. Ein USB-Kabel samt USB-Steckdose, beispielsweise eines Computers, ist in den meisten Haushalten zu finden.

Vorzugsweise weist das Zahnpflegeelement ein U-Profil, ein H-Profil, eine Plattenform oder eine Zylinderform auf. Durch ein U-Profil wird jeweils mindestens ein Zahn von allen zugänglichen Seiten umschlossen und entsprechend gereinigt. Es besteht keine Notwendigkeit das Zahnpflegeelement an verschiedene Seiten des Zahnes zu verschieben. Alternativ kann das Zahnpflegeelement ein H-Profil aufweisen, welches mit mindestens zwei Zähnen, einem Zahn aus einem Oberkiefer und einem Zahn aus dem Unterkiefer, gleichzeitig in Kontakt ist.

Weiterhin kann das Zahnpflegeelement beispielsweise ein U-, Platten- und/oder Zylinderprofil aufweisen. Durch diese Gestaltungsmöglichkeiten kann das Zahnpflegeelement an einen Mundraum angepasst werden.

Vorzugsweise ist das Zahnpflegeelement gerade ausgebildet. Dies hat den Vorteil, dass das Zahnpflegeelement relativ kurz ausgebildet und dadurch platzsparend ist. Ein gerades Zahnpflegeelement sollte relativ kurz ausgebildet sein um Radien eines Kiefers zu folgen. Weiterhin ist eine Produktion von geraden Zahnpflegeelementen einfacher als die Produktion von gebogenen Zahnpflegeelementen.

Vorzugsweise ist das Kabel mit einer Kabelaufrollanordnung verbunden. Die Kabelaufrollanordnung dient zu einem sicheren Aufbewahren des Kabels. Durch die Kabelaufrollanordnung wird weiterhin ein Verknoten und Abknicken des Kabels verhindert. Dies verlängert die Lebensdauer des Kabels und einen Benutzerkomfort. Weiterhin kann durch ein Auf- und Ab-Rollen des Kabels der Betriebszustand des Ultraschalls geändert werden.

Vorzugsweise weist der Behälter mindestens einen Zahnpflegemittelspender auf. Dadurch muss kein externer Zahnpflegemittelspender mitgeführt werden.

Vorzugsweise weist der Zahnpflegemittelspender ein Zahnpflegemittel auf, das eine desinfizierende, speichelstimulierende und / oder säubernde Wirkung hat und / oder Lebensmittelbestimmungen entspricht. Durch das Zahnpflegemittel wird die reinigende Wirkung des Zahnpflegeelementes verstärkt. Da das Zahnpflegemittel den Lebensmittelbestimmungen entspricht kann das Zahnpflegemittel geschluckt werden. Weiterhin kann das Zahnpflegemittel eine Übertragung des Schalls von dem Zahnpflegeelement auf die Zähne verbessern, was in einer Verbesserung der reinigenden Wirkung resultiert.

Vorzugsweise umfasst das Zahnpflegeelement die Steuereinrichtung. Durch diese Anordnung wird der Platzbedarf im Gehäuse reduziert, sodass dieses kleiner dimensioniert werden kann. Dadurch wird die Zahnpflegeanordnung kompakt gehalten. Beispielsweise kann die Steuereinrichtung im Zahnpflegeelement angeordnet sein, sodass die Steuereinrichtung durch das Zahnpflegeelement eingekapselt ist. Dadurch ist die Steuereinrichtung vor Feuchtigkeit und anderen Umwelteinflüssen geschützt.

Vorzugsweise weist das Zahnpflegeelement eine Sensoranordnung auf, und das Zahnpflegemittel ändert seinen Zustand in Abhängigkeit von Zahnplaque, wobei die Sensoranordnung den Zustand des Zahnpflegemittels erfasst. Das Zahnpflegemittel kann sich beispielsweise mit Zahnplaque, Lebensmittelresten und/oder anderen im Mundraum befindlichen Fremdkörpern verbinden, wobei die Verbindung vom Zahnpflegemittel mit Zahnplaque sich in einer Zustandsänderung des Zahnpflegemittels niederschlägt. Zahnplaque wird auch einfach Plaque genannt. Diese Zustandsänderung kann beispielsweise in einer Färbung, einer Temperaturänderung oder einer Viskositätsänderung des Zahnpflegemittels resultieren.

Die Zustandsänderung kann beispielsweise durch den Benutzer der Zahnpflegeanordnung und/oder durch die Sensoranordnung erfasst werden und signalisiert wie sauber oder verschmutzt die Zähne und/oder der Mundraum sind.

Die Sensoranordnung kann beispielsweise auch einen Temperatursensor aufweisen, wodurch eine Temperatur und/oder eine Abweichung dieser Temperatur, wie etwa Fieber, des Benutzers festgestellt werden kann. Weiterhin kann die Sensoranordnung beispielsweise ein Oximeter aufweisen, mit dem ein Sauerstoffgehalt und/oder eine Sauerstoffsättigung des Zahnfleisches ermittelt werden kann. Dies ermöglicht eine breite Anwendung der Zahnpflegeanordnung beispielsweise in der Pflege oder im Krankenhaus.

Vorzugsweise weist die Sensoranordnung eine Leuchteinrichtung und einen Lichtsensor auf, wobei der Lichtsensor zumindest einen Teil der durch die Leuchteinrichtung emittierten Wellenlängen erfasst. Die Leuchteinrichtung beleuchtet wenigstens einen Teil des Zahnes. Die Zustandsänderung des Zahnpflegemittels ist eine Einfärbung des Plaques, die bestimmte Wellenlängenbereiche des durch die Leuchteinrichtung emittierten Lichtes absorbiert. Dadurch wird die Sauberkeit des Mundraumes ermittelt und der Benutzer kann die Zahnpflegeanordnung optimal benutzen.

Zur Ermittlung der Sauberkeit kann zwischen zwei Verfahren gewählt werden:
Im ersten Verfahren verursacht das Zahnpflegemittel eine Fluoreszenz in Verbindung mit der Plaque, sodass diese unter definierten Lichtbedingungen, wie bestimmten Wellenlängenbereichen, hell leuchtet. Der Lichtsensor erfasst diese Erhöhung der Leuchtintensität, sodass bei einer Leuchtintensität über einem Schwellenwert angezeigt wird, dass der Mundraum und/oder die Zähne stark verschmutzt sind.

Im zweiten Verfahren wird das durch die Leuchteinrichtung emittierte Licht von den Zähnen reflektiert, wobei das Zahnpflegemittel in Verbindung mit der Zahnplaque einen Reflektionsgrad der Zähne reduziert. Der Lichtsensor erfasst die geringere Lichtintensität und anhand der Lichtintensität kann die Sauberkeit der Zähne und/oder des Mundraumes bestimmt werden.

Dazu erfasst der Lichtsensor beispielsweise die von einem Teil der Zahnoberflächen reflektierten Wellenlängen des durch die Leuchteinrichtung emittierten Lichtes. So reflektiert eine saubere Zahnoberfläche mehr Licht als eine verschmutzte Zahnoberfläche. Verschmutzungen, wie beispielsweise Plaque, werden durch die Zustandsänderung des Zahnpflegemittels hervorgehoben, wobei die Verbindung des Zahnpflegemittels und des Plaques einen Teil des Lichts beziehungsweise der Wellenlängen absorbiert. Diese Reflektion des Lichtes erfasst der Lichtsensor. Wird ein definiertes Maximum des reflektierten Lichtes erfasst, kann das Zahnpflegeelement dies dem Benutzer signalisieren. Die Signalisierung kann beispielsweise über Vibrieren des Zahnpflegeelements durchgeführt werden.

Die durch den Lichtsensor erfasste Daten können beispielsweise gespeichert und ausgewertet werden. Dazu können diese Daten beispielsweise an eine App übermittelt werden, durch die der Benutzer die Daten der Zahnsauberkeit und/oder insgesamt seiner Mundhygiene analysieren kann. Dies ermöglicht eine gezielte und informative Rückmeldung an den Benutzer, der durch diese Informationen sein Zahnpflegeverhalten anpassen kann.

Die Erfindung wird im Folgenden anhand eines bevorzugten Ausführungsbeispiels in Verbindung mit der Zeichnung beschrieben. Hierin zeigen:
- Fig. 1: einen geschlossenen Behälter;
- Fig. 2: einen geöffneten Behälter und ein Zahnpflegeelement;
- Fig. 3: einen schematischen Querschnitt eines Behälters.

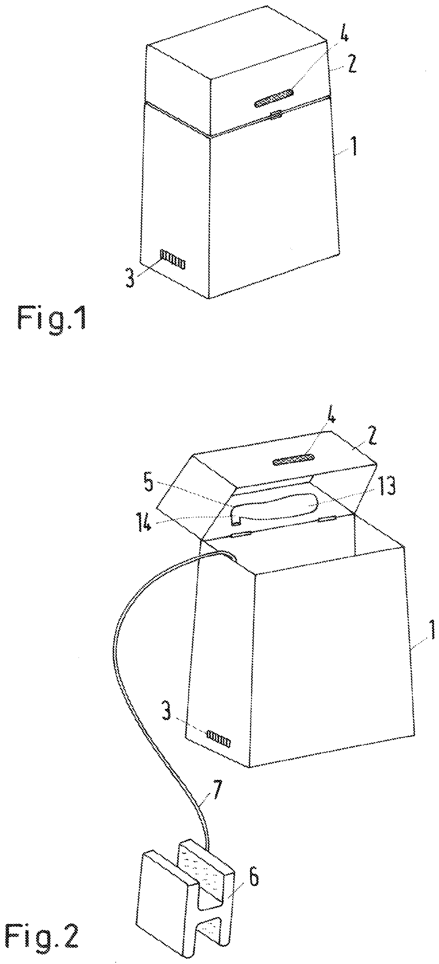

In Fig. 1 ist ein geschlossener Behälter 1 dargestellt. Der Behälter 1 weist einen bewegbaren Deckel 2 und eine Batterieladeanordnung 3 auf. Der Deckel 2 weist ein lichtdurchlässiges Element 4 und einen Zahnpflegemittelspender 5 auf.

Fig. 2 stellt den Behälter 1 mit dem Deckel 2 in einer geöffneten Stellung dar. In dem Deckel 2 ist ein Zahnpflegemittelspender 5 angeordnet. Ein Zahnpflegeelement 6 ist mit einem Kabel 7 verbunden, wobei das Kabel 7 im Inneren des Behälter 1 angeordnet ist.

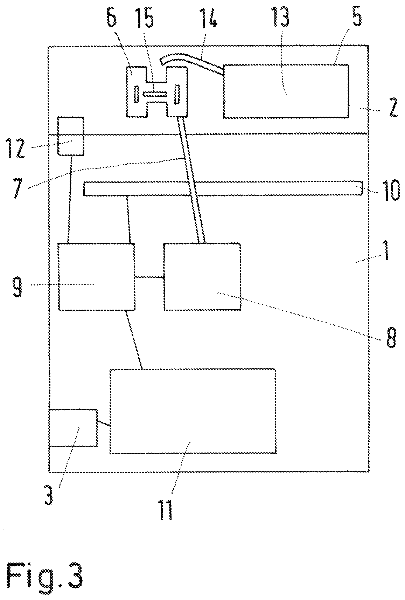

Fig. 3 stellt einen schematischen Querschnitt des Behälters 1 mit dem Deckel 2 in einer geschlossenen Stellung dar. Das Zahnpflegeelement 6 ist in einem oberen Bereich des Behälters 1 und / oder zu einem Teil in dem Deckel 2 entnehmbar angeordnet, wobei das Innere des Behälters und / oder des Deckels zumindest teilweise eine Zahnpflegeelementaufnahme bildet. Das Zahnpflegeelement 6 ist mit dem Kabel 7 mit einer Kabelaufrollanordnung 8 verbunden, wobei das Kabel 7 durch die Kabelaufrollanordnung 8 mit einer Steuereinheit 9 verbunden ist. Die Steuereinheit 9 weist einen Zeitgeber auf und ist mit einer UV-Lampe 10, einer Batterie 11 und einem Schließsensor 12 verbunden. Weiterhin ist die Steuereinrichtung 9 mit einem nicht dargestellten Schalter verbunden. Durch den Schalter kann ein Benutzer den Betriebsmodus der Zahnpflegeanordnung wählen und andere Einstellungen vornehmen. Außerdem regelt die Steuereinheit die Schallgeber 15 und ermöglicht so verschiedene Betriebmodi, wie beispielsweise eine reine Ultraschallreinigung, eine Schallreinigung, eine Kombination aus Ultraschallreinigung und Schallreinigung, oder ein Entspannungsmodus. Die UV-Lampe 10 wirkt in der Zahnpflegeelementaufnahme und dementsprechend auch auf das Zahnpflegeelement 6, das in diesem Ausführungsbeispiel ein H-Profil aufweist. Alternativ kann das Zahnpflegeelement auch als U-Profil, als Platte oder als Zylinder ausgebildet sein. Durch eine reflektierende Oberfläche der Zahnpflegeelementaufnahme wird der Wirkbereich der UV-Lampe 10 vergrößert. Die Batterie 11 dient als Stromquelle und ist mit der Batterieladeanordnung 3 verbunden. Durch die Batterieladeanordnung 3 kann die Batterie 11 geladen werden. Dabei kann die Batterieladeanordnung 3 als eine Steckdose einer gängigen Norm, beispielsweise Micro-USB oder dergleichen, ausgeführt sein. Durch den Schließsensor 12 wird ein Schließzustand des Deckels 2 ermittelt. In dem Deckel 2 ist der Zahnpflegemittelspender 5 angeordnet, der Zahnpflegemittel 13 durch eine fluidische Verbindung 14 in die Zahnpflegemittelaufnahme überführen kann, um das Zahnpflegemittel 13 auf das Zahnpflegeelement 6 aufzutragen. Das Zahnpflegemittel 6 weist mindestens einen Schallerzeuger 15 auf.

Der Behälter 1, der in etwa Maße beispielsweise einer Zigarettenschachtel (9 cm x 6 cm x 2,5cm) und ein Gewicht von weniger als 200 g aufweist, ist durch die relativ kleinen Maße leicht transportabel. Somit kann man den Behälter 1 überall mithin nehmen und sich vor Ort, insbesondere ohne auf sanitäre Einrichtungen angewiesen zu sein die Zähne putzen. Ein Benutzer muss nicht 10 Minuten in einer Sanitäre Einrichtung isoliert verbringen, umso mehr kann er z. B. Autofahren, spazieren oder TV sehen.

Um sich die Zähne zu putzen, wird der Deckel 1 geöffnet und Zahnpflegemittel 13 wird aus dem Zahnpflegemittelspender 5 auf das Zahnpflegeelement 6 durch fluidische Verbindungen 14, wie Kanäle oder dergleichen, aufgetragen. Alternativ kann erst das Zahnpflegemittel 13 auf das Zahnpflegeelement 6 übertragen werden, bevor der Deckel 1 geöffnet wird. Das Zahnpflegemittel 13 ist im weitesten Sinne mit einer Zahnfluid, umgangssprachlich Zahnpasta, zu vergleichen. Das Zahnpflegemittel 13 soll eine reinigende Wirkung des Zahnpflegeelementes 6 haben und von dem Schallerzeuger erzeugte Schwingungen auf Zähne, Zahnfleisch oder dergleichen, übertragen. Dazu soll das Zahnpflegemittel 13 einige Kriterien, wie eine desinfizierende, speichelstimulierende und / oder säubernde Wirkung haben und / oder Lebensmittelbestimmungen und/oder Zahnplaque färbend entsprechen. In einem Optimalfall entspricht das Zahnpflegemittel 13 allen genannten Kriterien. Ist das Zahnpflegeelement 6 nun mit dem Zahnpflegemittel 13 versehen, wird das Zahnpflegeelement 6 aus der Zahnpflegeelementaufnahme entnommen und das Kabel 7 wird ausgerollt und rastet ein. Durch das Einrasten wird der Betriebszustand des Zahnpflegeelements 6 verändert, sodass die Schallerzeuger 15 mit Strom versorgt wird. Gleichzeitig kann durch eine Vibrationsvorrichtung (nicht dargestellt) im Behälter 1 dem Nutzer anzeigen, dass die für den Menschen nicht spürbare Ultraschallreinigung aktiv ist. Das Zahnpflegeelement 6 wird nun in einen Mund genommen, sodass eine Vertiefung des Zahnpflegeelementes 6 mit mindestens einem Zahn in Eingriff steht. Das Kabel 7 dient hierbei als Sicherungselement gegen Verschlucken und / oder Einatmen. Ist das Zahnpflegeelement 6 als H-Profil ausgebildet, liegt in einer ersten Vertiefung mindestens ein Zahn eines Oberkiefers und in einer zweiten Vertiefung mindestens ein Zahn eines Unterkiefers. Um das Zahnpflegeelement 6 kompakt zu gestalten, weist es, im Gegensatz zu mundschutzähnlichen Zahnpflegeelementen, eine gerade Form auf. Damit das Zahnpflegeelement 6 mit allen Zähnen in Kontakt kommen kann, ist das Zahnpflegeelement 6 relativ kurz ausgebildet sein und ist dementsprechend mit nur einen Teil der Zähne in Kontakt. So weist das Zahnpflegeelement 6 beispielsweise eine Länge zwischen 2 cm und 4 cm auf. Um alle Zähne gleichmäßig zu reinigen beginnt man mit einer Positionierung des Zahnpflegeelementes 6 auf einer ersten Seite des Kiefers und verschiebt das Zahnpflegeelement 6 nach einer gewissen Wirkdauer ein Stück weiter in Richtung einer zweiten Seite. Der Schallerzeuger 15 erzeugen einen Schall im Bereich von 25 kHz bis 10MHz, vorzugsweise Ultraschall mit einer Frequenz von ca. 1,6 MHz. Diese Frequenz weist neben einer reinigenden Wirkung auch eine heilende, entspannende und desinfizierende Wirkung auf. Für eine optimale Übertragung des Ultraschalls auf die Zähne weist das Zahnpflegeelement 6 eine relativ glatte Oberfläche auf. Das Zahnpflegeelement 6 kann aus einer elastischen Masse, wie beispielsweise Silikon, Kautschuk, Kunststoff oder dergleichen hergestellt werden. Weiterhin sollte die Masse eine gewisse UV-Beständigkeit aufweisen. Die elastische Masse umgibt den Schallerzeuger 15. Alternativ zu dem erzeugten Ultraschall, kann der Schallerzeuger 15 eine Frequenz erzeugen, die kleiner als Ultraschallfrequenzen ist und im Schallbereich liegt. Für eine optimale Übertragung dieser Schallfrequenz sollte das Zahnpflegeelement 6 eine relativ rauere Oberfläche, vorzugsweise mit einer Bürstenanordnung, aufweisen.

Nachdem das Zahnpflegeelement 6 alle Zähne gereinigt hat wird das Zahnpflegeelement 6 entnommen und in die Zahnpflegeelementaufnahme gelegt. Durch das Aufrollen des Kabels 7 wird der Betriebszustand des Schallerzeugers 15 verändert und die Vibrationsvorrichtung schaltet sich ab. Im Mund verbliebende Rückstände des Zahnpflegemittels 13 können geschluckt werden, wenn das Zahnpflegemittel 13 den Lebensmittelbestimmungen entspricht und deshalb unbedenklich ist. Das Kabel 7 wird durch die Kabelaufrollanordnung 8 aufgerollt. Diese Kabelaufrollanordnung 8 verhindert ein Verknoten und Knicken des Kabels 7. Da das Kabel 7 aufgerollt ist, befindet sich nur das Zahnpflegeelement 6 in der Zahnpflegeelementaufnahme. Das Kabel 7 ist verstaut und der Deckel 2 kann geschlossen werden.

Der Schließsensor 12 ermittelt den Schließzustand und gibt diesen weiter an die Sensoreinheit 9. Weiterhin kann die Sensoreinheit 9 durch eine Verbindung zur Kabelaufrollanordnung 8 ermitteln, ob sich das Zahnpflegeelement 6 in der Zahnpflegeelementaufnahme befindet. Befindet sich das Zahnpflegeelement 6 in der Zahnpflegeelementaufnahme und ist der Deckel 2 geschlossen, schaltet die Sensoreinheit 9 die UV-Lampe 10 ein. Das lichtdurchlässige Element 4 lässt erkennen, ob die UV-Lampe 10 eingeschaltet oder ausgeschaltet ist. Die UV-Lampe 10 emittiert Strahlung mit Wellenlängen im ultravioletten Bereich. Diese Strahlung hat eine desinfizierende und keimtötende Wirkung. Um den Wirkbereich der UV-Lampe 10 zu vergrößern weist die Zahnpflegeelementaufnahme eine reflektierende Oberfläche auf. Weiterhin erzeugt die UV-Lampe 10 Ozon. Ozon hat ebenso eine desinfizierende und keimtötende Wirkung und neutralisiert Gerüche.

Weiterhin wird die Zahnpflegeelementaufnahme durch das Ozon geflutet, sodass das Zahnpflegeelement 6 auch an schlecht zugänglichen Stellen desinfiziert wird. Nach einer definierten Wirkdauer schaltet die Steuereinheit 9 die UV-Lampe 10 aus. Es sind nun ein Großteil der Keime und Bakterien abgetötet und eine weitere Laufzeit der UV-Lampe 10 hätte keine signifikant bessere keimtötende und desinfizierende Wirkung. Nachdem das Zahnpflegeelement 6 desinfiziert wurde, ist es sofort wieder einsatzbereit.

Die Batterie 11 sollte mindestens 21 Zyklen (drei Mal täglich für sieben Tage), also Zahnreinigung und Zahnpflegeelementreinigung, ermöglichen. Wenn ein Batterieladzustand nicht mehr ausreichend für eine Reinigung und Benutzung ist, so kann der Benutzer durch ein akustisches und / oder optisches Signal darauf aufmerksam gemacht werden. Die Batterie 11 wird durch die Batterieladeanordnung 3 geladen. Dazu ist eine Steckdose einer gängigen Norm, beispielsweise Micro-USB oder dergleichen, in den Behälter 1 integriert und mit der Batterie 11 verbunden. Um die Batterie 11 zu laden, wird ein erstes Ende eines Mikro-USB-Kabels in die Batterieladeanordnung 3 gesteckt und ein zweites Ende des Mikro-USB-Kabels in einen dafür vorgesehenen Steckplatz, beispielsweise ein Handyladegerät, Computer oder dergleichen, gesteckt. Die Batterie 11 wird geladen. Sobald der Batterieladezustand der Batterie 11 ein definiertes Level erreicht hat macht ein akustisches und / oder optisches Signal auf diesen aufmerksam und das Mikro-USB-Kabel kann aus der Batterieladeanordnung 3 entnommen werden.

Weiterhin kann der Behälter 1 als ein zusätzliches Zahnpflegeelement eine zusammenschiebbare Zahnbürste mit einem Schallerzeuger 15 aufweisen. Diese Zahnbürste ist mit einem Kabel 7 und einer Kabelaufrollanordnung 8 mit der Sensoreinheit 9 verbunden. Dadurch kann der Benutzer gezielt Stellen reinigen, oder eine herkömmliche Bürstenputztechnik potenziert durch die Schallwirkung anwenden. Die Zahnpflegeelementaufnahme weist einen Raum zu einer Aufnahme der Zahnbürste auf. Dadurch liegt die Zahnbürste im Wirkbereich der UV-Lampe 10 und wird desinfiziert.

Weiterhin weist das Zahnpflegeelement 6 eine nicht dargestellte Steuereinheit auf. Durch die Integration der Steuereinheit in das Zahnpflegeelement 6 wird der im Behälter 1 benötigte Raum verkleinert, sodass andere Komponenten wie beispielsweise die Batterie 11 vergrößert werden können.

Das Zahnpflegeelement 6 weist weiterhin eine nicht dargestellte Sensoranordnung auf, die einen Sauberkeitszustand wenigstens eines Zahnes erfassen und/oder überwachen kann. Dazu weist das Zahnpflegemittel ein Mittel auf, das seinen Zustand ändert, wenn es in Verbindung mit Zahnplaque, Lebensmittelresten, Verschmutzungen oder dergleichen kommt. Der Zustand wird optisch durch einen nicht dargestellten Lichtsensor erfasst.

Zur Erfassung der Zahnsauberkeit und/oder Mundraumsauberkeit stehen zwei Verfahren zur Verfügung:
In einem ersten Verfahren weist das Zahnpflegemittel einen Anteil auf, der in Verbindung mit Zahnplaque eine fluoreszierende Wirkung unter bestimmten Lichtbedingungen und/oder in definierten Wellenlängenbereichen entfaltet. Je schmutziger Zähne sind umso heller leuchten sie. Ziel der Zahnpflege ist es bei diesem Verfahren eine möglichst geringe Leuchtintensität zu erreichen, die auf saubere Zähne und/oder auf einen sauberen Mundraum schließen lässt.

In einem zweiten Verfahren verbindet sich zumindest ein Teil des Zahnpflegemittels mit Zahnplaque und reduziert somit einen Reflektionsgrad der Zähne. Je sauberer die Zähne sind, desto mehr Licht reflektieren sie. Ziel ist es also einen möglichst große Leuchtintensität der Reflektion eines definierten Wellenlängenbereiches des durch die Leuchteinrichtung emittierten Lichts zu messen.

Sobald ein definiertes Maximum oder Minimum der Lichtreflektion der Zähne erreicht wird, wird der Benutzer benachrichtigt, beispielsweise durch eine Vibration des Zahnpflegeelementes 6 und/oder durch eine nicht dargestellte App eines mobilen Endgerätes, die mit der Zahnpflegeanordnung im Informationsaustausch steht. Dadurch kann der Benutzer seine Zahnpflegeroutine analysieren und optimieren und mögliche Schwachstellen dieser ausmerzen.

### Bezugszeichenliste

- 1.: Behälter
- 2.: Deckel
- 3.: Batterieladeanordnung
- 4.: Lichtdurchlässiges Element
- 5.: Zahnpflegemittelspender
- 6.: Zahnpflegeelement
- 7.: Kabel
- 8.: Kabelaufrollanordnung
- 9.: Steuereinrichtung
- 10.: UV-Lampe
- 11.: Batterie
- 12.: Schließsensor
- 13.: Zahnpflegemittel
- 14.: Fluidische Verbindung
- 15.: Schallerzeuger

## Patentansprüche

1. Zahnpflegeanordnung mit Behälter (1), der einen bewegbaren Deckel (2) und eine Zahnpflegeelementaufnahme und eine im Behälter angeordneten UV-Lampe (10) aufweist, deren Wirkbereich die Zahnpflegeelementaufnahme umfasst, wobei
die UV-Lampe (10) mit einer Steuereinrichtung verbunden ist, mit der ein Betriebszustand der UV-Lampe (10) veränderbar ist,
die Steuereinrichtung mit einem Schließsensor (12) verbunden ist, mit dem ein Schließzustand des Deckels (2) feststellbar ist,
die Steuereinrichtung einen Zeitgeber aufweist,
mindestens ein Zahnpflegeelement (6) entnehmbar in der Zahnpflegeelementaufnahme angeordnet ist,
das Zahnpflegeelement (6) mindestens einen Schallerzeuger (15), insbesondere einen Ultraschallerzeuger aufweist, und
mindestens zwei Zahnpflegemittelspender (5) auf gegenüberliegenden Seiten der Zahnpflegeelementaufnahme angeordnet sind,
**dadurch gekennzeichnet, dass** das Zahnpflegeelement (6) und die Steuereinrichtung durch ein Kabel (7) verbunden sind und die Zahnpflegemittelspender (5) mindestens eine fluidische Verbindung zu der Zahnpflegeelementaufnahme aufweisen.

2. Zahnpflegeanordnung nach Anspruch 1 **dadurch gekennzeichnet, dass** die Zahnpflegeelementaufnahme eine reflektierende Oberfläche aufweist.

3. Zahnpflegeanordnung nach Anspruch 1 oder 2 **dadurch gekennzeichnet, dass** der Behälter (1) eine Batterie (11) aufweist, die mit der Steuereinrichtung verbunden ist.

4. Zahnpflegeanordnung nach Anspruch 3 **dadurch gekennzeichnet, dass** die Batterie mit einer Batterieladeanordnung (11) verbunden ist.

5. Zahnpflegeanordnung nach Anspruch 1 bis 4 **dadurch gekennzeichnet, dass** das Zahnpflegeelement (6) ein U-Profil, ein H-Profil, eine PlattenForm oder Zylinderform aufweist.

6. Zahnpflegeanordnung nach Ansprüchen 1 bis 5 **dadurch gekennzeichnet, dass** das Zahnpflegeelement (6) gerade ausgebildet ist.

7. Zahnpflegeanordnung nach Anspruch 1 **dadurch gekennzeichnet, dass** das Kabel (7) mit einer Kabelaufrollanordnung (8) und einem Schalter verbunden ist.

8. Zahnpflegeanordnung nach Ansprüchen 1 bis 7 **dadurch gekennzeichnet, dass** der Zahnpflegemittelspender (5) ein Zahnpflegemittel aufweist, das eine desinfizierende, speichelstimulierende und / oder säubernde Wirkung hat und / oder Lebensmittelbestimmungen entspricht.

9. Zahnpflegeanordnung nach einem der Ansprüche 1 bis 8 **dadurch gekennzeichnet, dass** das Zahnpflegeelement (6) die Steuereinrichtung umfasst.

10. Zahnpflegeanordnung nach einem der Ansprüche 1 bis 9 **dadurch gekennzeichnet, dass** das Zahnpflegeelement (6) eine Sensoranordnung aufweist, und das Zahnpflegemittel seinen Zustand in Abhängigkeit von Zahnplaque ändert, wobei die Sensoranordnung den Zustand des Zahnpflegemittels erfasst.

11. Zahnpflegeanordnung nach Anspruch 10 **dadurch gekennzeichnet, dass** das Zahnpflegemittel Zahnplaque für eine Lichtwellenlänge sichtbar macht, und dass die Sensoranordnung eine Leuchteinrichtung, die die Lichtwellenlänge emittiert und einen Lichtsensor aufweist, wobei der Lichtsensor zumindest einen Teil der durch die Leuchteinrichtung emittierten Wellenlängen erfasst.

## Claims

1. Dental care assembly having a container (1) which has a movable lid (2) and a dental care element receptacle and a UV lamp (10) which is arranged in the container (1) and the effective range of which comprises the dental care element receptacle, wherein
the UV lamp (10) is connected to a control device with which an operating state of the UV lamp (10) is changeable,
the control device is connected to a closing sensor (12), with which a closing state of the lid (2) is determinable,
the control device comprises a timer,
at least one dental care element (6) is removably arranged in the dental care element receptacle,
the dental care element (6) has at least one sound generator (15), in particular an ultrasonic generator, and
at least two dental care agent dispensers (5) are arranged on opposite sides of the dental care element receptacle,
**characterized in that** the dental care element (6) and the control device are connected by a cable (7) and the dental care agent dispensers (5) have at least one fluidic connection to the dental care element holder.

2. Dental care assembly according to claim 1, **characterized in that** the dental care element receptacle comprises a reflective surface.

3. Dental care assembly according to claim 1 or 2, **characterized in that** the container (1) comprises a battery (11) which is connected to the control device.

4. Dental care assembly according to claim 3, **characterized in that** the battery is connected to a battery charging arrangement (11).

5. Dental care assembly according to claim 1 to 4, **characterized in that** the dental care element (6) comprises a U-profile, an H-profile, a plate shape or a cylinder shape.

6. Dental care assembly according to claims 1 to 5, **characterized in that** the dental care element (6) is designed to be straight.

7. Dental care assembly according to claim 1, **characterized in that** the cable (7) is connected to a cable winding arrangement (8) and a switch.

8. Dental care assembly according to claims 1 to 7, **characterized in that** the dental care agent dispensers (5) comprises a dental care agent which has a disinfecting, saliva-stimulating and/or cleansing effect and/or complies with food regulations.

9. Dental care assembly according to one of claims 1 to 8, **characterized in that** the dental care element (6) accommodates the control device.

10. Dental care assembly according to one of claims 1 to 9, **characterized in that** the dental care element (6) comprises a sensor arrangement, and the dental care agent changes its state depending on dental plaque, wherein the sensor arrangement detecting the state of the dental care agent.

11. Dental care assembly according to claim 10, **characterized in that** the dental care agent makes dental plaque visible for a light wavelength, and **in that** the sensor arrangement comprises a light device which emits the light wavelength and a light sensor, the light sensor detecting at least some of the wavelengths emitted by the light device.

## Revendications

1. Ensemble de soins dentaires avec un conteneur (1), qui comporte un couvercle mobile (2) et un logement d'élément de soins dentaires et une lampe UV (10) disposée dans le conteneur, dont la zone d'action comprend le logement d'élément de soins dentaires, sachant que
la lampe UV (10) est reliée à un dispositif de commande avec lequel un état de fonctionnement de la lampe UV (10) peut être modifié,
le dispositif de commande est relié à un capteur de fermeture (12) avec lequel un état de fermeture du couvercle (2) peut être constaté,
le dispositif de commande comporte un temporisateur,
au moins un élément de soins dentaires (6) est disposé pouvant être enlevé dans le logement d'élément de soins dentaires,
l'élément de soins dentaires (6) comporte au moins un générateur de sons (15), en particulier un générateur d'ultrasons, et
au moins deux distributeurs de moyen de soins dentaires (5) sont disposés sur les côtés opposés du logement d'élément de soins dentaires,
**caractérisé en ce que** l'élément de soins dentaires (6) et le dispositif de commande sont reliés par un câble (7) et les distributeurs de moyen de soins dentaires (5) comportent au moins une liaison fluidique au logement d'élément de soins dentaires.

2. Ensemble de soins dentaires selon la revendication 1, **caractérisé en ce que** le logement d'élément de soins dentaires comporte une surface réfléchissante.

3. Ensemble de soins dentaires selon la revendication 1 ou 2, **caractérisé en ce que** le conteneur (1) comporte une batterie (11), qui est reliée au dispositif de commande.

4. Ensemble de soins dentaires selon la revendication 3, **caractérisé en ce que** la batterie est reliée à un système de charge de batterie (11).

5. Ensemble de soins dentaires (1) selon l'une quelconque des revendications 1 à 4, **caractérisé en ce que** l'élément de soins dentaires (6) comporte un profilé en U, un profilé en H, une forme de plaque ou une forme cylindrique.

6. Ensemble de soins dentaires selon l'une quelconque des revendications 1 à 5, **caractérisé en ce que** l'élément de soins dentaires (6) est constitué droit.

7. Ensemble de soins dentaires selon la revendication 1, **caractérisé en ce que** le câble (7) est relié à un système enrouleur de câble (8) et à un interrupteur.

8. Ensemble de soins dentaires selon l'une quelconque des revendications 1 à 7, **caractérisé en ce que** le distributeur de moyen de soins dentaires (5) comporte un moyen de soins dentaires, qui possède un effet désinfectant, stimulant la salivation et/ou nettoyant et/ou correspond aux dispositions relatives aux denrées alimentaires.

9. Ensemble de soins dentaires selon l'une quelconque des revendications 1 à 8, **caractérisé en ce que** l'élément de soins dentaires (6) comprend le dispositif de commande.

10. Ensemble de soins dentaires selon l'une quelconque des revendications 1 à 9, **caractérisé en ce que** l'élément de soins dentaires (6) comporte un système de détection et le moyen de soins dentaires modifie son état en fonction de la plaque dentaire, sachant que le système de détection saisit l'état du moyen de soins dentaires.

11. Ensemble de soins dentaires selon revendication 10, **caractérisé en ce que** le moyen de soins dentaires rend visible une plaque dentaire pour une longueur d'onde de lumière et **en ce que** le système de détection comporte un dispositif lumineux, qui émet la longueur d'onde de lumière et comporte un capteur de lumière, sachant que le capteur de lumière saisit au moins une partie des longueurs d'ondes émises par le dispositif lumineux.
